# EUROPEAN PATENT APPLICATION

(11) **EP 3 293 812 A1**
(43) Date of publication of application: **14.03.2018**
(21) Application number: 17190004.6
(22) Date of filing: 07.09.2017
(51) Int. Cl.: H01M 10/66, H01M 10/615, H01M 10/625, H01M 10/6554, B60L 11/18

(54) **BATTERY HEATING SYSTEM IN TRANSPORTATION APPARATUS**

(30) Priority: 07.09.2016 US 201662384298 P; 06.09.2017 US 201715696669
(71) Applicant: Thunder Power New Energy Vehicle Development Company Limited, Central, Hong Kong (CN)
(72) Inventor: BRUSCO, Massimiliano, Central Hong Kong (CN)
(74) Representative: Sadler, Peter Frederick

(57) **Abstract**

Embodiments can enable a passenger to connect his/her portable device, such as smart phone to a display positioned to be used by the passenger. After the passenger connects the portable device to the passenger display, the passenger may be enabled to control the portable device by providing inputs through the passenger display and/or the portable device. In some embodiments, the passenger may be enabled to control one or more in-vehicle devices through the portable device after it is connected to the passenger display.

## Description

### CROSS-REFERENCE TO RELATED APPLICATION

The present application claims the benefit of U.S. Provisional Application No. 62/384,298, filed September 7, 2016, the entire contents of which are hereby incorporated by reference for all purposes.

### BACKGROUND OF THE INVENTION

This invention generally relates to a battery system for a transportation apparatus.

Electric vehicle typically uses one or more lead acid batteries as a power source. An electric vehicle's range, i.e., the amount of available current from its batteries is affected by the temperature of the batteries. In general, the cooler the batteries, the shorter the range associated with the batteries. Those batteries can operate optimally if the temperatures of those batteries are kept within an optimum operating temperature range. For example, a battery which is capable of delivering one hundred percent of its power at a temperature of 80 F. may only deliver about forty percent of its power at 0 F. Moreover, keeping those batteries with in the optimum operating temperature range can prolong the life of those batteries.

### BRIEF SUMMARY OF THE INVENTION

Embodiments can provide a battery heating system that includes a floor mat device and a heat exchange mechanism that can facilitate heat exchange from the floor mat to one or more batteries in a transportation apparatus. The floor mat device may comprise a upper flat surface, a fastening component to facilitate the floor mat device to be secured to a floor board of the transportation apparatus, one or more electrical conductors internal to the floor mat for connecting the mat to an onboard power source of the transportation apparatus, one or more heating elements for generating heat from electrical power, and/or any other components. In some embodiments, the floor mat device may be placed on a floor of the transportation apparatus and connected to a power source to enable controlled heat to be generated. In some embodiments, the floor mat device may be made of plastic, urethane, neoprene or other composite materials to enclose the electrical conductors internal to the mat and transfer the electrically produced heat to the heat exchange mechanism.

The heat exchange mechanism may comprise one or more plate members capable of transferring heat. In some embodiments, the heat mechanism may be embedded in the floor board of the transportation apparatus. In some embodiments, the floor board of the transportation apparatus may itself be the heat exchange mechanism. The one or more batteries in the transportation apparatus can be placed under the heat exchange mechanism and has a contact with the heat exchange mechanism such that heat generated by the floor mat device can be transferred to the one or more batteries through the heat exchange mechanism

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and embodiments, will become more apparent upon referring to the following specification, claims, and accompanying drawings.

### BRIEF DESCRIPTION OF THE DRAWINGS

FIG. 1 generally illustrates an embodiment of a transportation apparatus in accordance with the disclosure.
FIG. 2 illustrates generally a battery heating system for heating/warming one or more batteries in a transportation apparatus.
FIG. 3A illustrates one example of a floor mat device 204 in accordance with the disclosure.
FIG. 3B illustrates one example of an interior of the floor mat device 204 shown in FIG. 3A.
FIG. 4 illustrates one example of a battery heat exchange mechanism 204 in accordance with the disclosure.

### DETAILED DESCRIPTION OF THE INVENTION

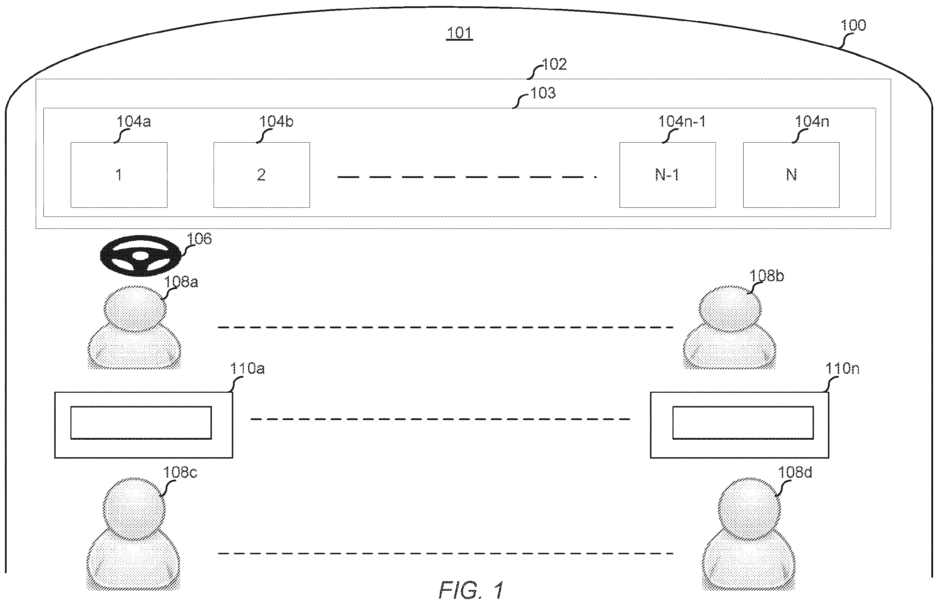

FIG. 1 generally illustrates an embodiment of a transportation apparatus 100 in accordance with the disclosure. The transportation apparatus 100 may include any apparatus that moves in distance. Examples of transportation apparatus 100 may include a vehicle such as a car, a bus, a train, a truck, a tram, or any other type of vehicle; may include a vessel such as a boat, a ship, a barge, a ferry or any other type of watercraft; may include an aircraft such as an airplane, a spaceship, or any other type of aircraft; or may include any other transportation apparatus. In one example, the transportation apparatus 100 is an electrical automobile. As shown, the transportation apparatus 100 may include a cabin 101 with a volume.

As shown in FIG. 1, in the cabin 101, there may be a dashboard 102 that has a screen 103. Although in this example, a dashboard screen 103 occupies the entire surface of the dashboard 102, this is not intended to be limiting. It is contemplated that in some cases, the dashboard screen 103 may occupy a portion of the dashboard 102 instead of the entire dashboard 102. In any case, the dashboard screen 103 is suitable to display one or more information panels, such as the information panels 104 shown in FIG. 1. In implementations, the dashboard screen 103 may include any display technology, such as liquid-crystal display (LCD), crystal LCD, light-emitting diode (LED), organic light-emitting diode (OLED), active-matrix organic light-emitting diode (AMOLED), Plasma, projection panel, cathode ray tube (CRT), and/or any other display technology. As also shown, the information panels 104 displayed on the dashboard screen 103 are separate and independent from each other such that the individual information panels 104 are displayed at corresponding positions on the dashboard screen 103. In this example, information panel 104a is displayed at position 1 on the dashboard screen 103, information panel 104b is displayed at position 2 on the dashboard screen 103, information panel 104n-1 is displayed at position N-1 on the dashboard screen 103, and information panel 104n is displayed at position N on the dashboard screen 103.

In some examples, information presented in the information panels 104 may include gauge information related to the transportation apparatus 100, such as current speed/altitude/direction/wind, current longitude/latitude, distance traveled, RPM, fuel level, battery level, and/or any other gauge information related to the transportation apparatus 100. In some examples, information presented in the information panels 104 may include indication information, such as seat belt, airbag, door, trunk, maintenance, safety, window lock, door lock indication information or any other indication information. In some examples, information presented in the information panels 104 may include navigational or GPS information related to navigation of the transportation apparatus 100, such as current street traveled on, map of an area the transportation apparatus 100 is traveling in, the destination information, direction instructions, traffic condition, estimated arrival time, estimated delay due to traffic, and/or any other navigation information. In some examples, information presented in the information panels 104 may include cabin information, such as current temperature, humidity, wind speed, number of passengers in one or more zones in the cabin 101 and/or any other cabin information. In some examples, information presented in the information panels 104 may include configuration information regarding the transportation apparatus 100, such as seat configuration, mirror configuration, battery configuration, driving mode configuration, and/or any other configuration. In some examples, information presented in the information panels 104 may include entertainment information. For example, such an information panel may include a video screen capable of presenting a video or still images, a browser screen capable of presenting web information, a game screen capable of presenting one or more games for user interaction, a music information screen capable of enabling a user to consume music pieces, e-commerce information screen capable of enabling a user to engage remote transaction via the Internet, radio information screen capable of presenting a list of radio stations available for user consumption, and/or any other type of infotainment screen. In some examples, information presented in the information panels 104 may include notification information such as incoming call, incoming text message, incoming video chat request, and/or any other notification information. Other examples of information panels 104 are contemplated.

As still shown in FIG. 1, the transportation apparatus 100 may comprise one or more steering wheels 106 in the cabin 101. Although only one steering wheel 106 is shown in FIG. 1, this is not intended to be limiting. In some examples, the transportation apparatus 100 may include more than one steering wheel 106. For example, it is contemplated that the transportation apparatus 100 may be an aircraft that comprises at least a main steering wheel 106 for the main pilot and at least a secondary steering wheel 106 for a co-polit.

As also shown in FIG. 1, one or more users 108 may be arranged to occupy their corresponding positions in the cabin 101. The users 108 may include one or more drivers that control the movement and/or navigation of the transportation apparatus 100, one or more passengers, and/or any other type of users 108. In this example, the user 108a is a driver that controls the driving of the transportation apparatus 100, while other users 108, e.g., users 108b-d, are passengers. As still shown, there may be multiple rows of users 108 within the cabin 101 of the transportation apparatus 100.

As shown, in a row where the passengers 108b-d are located in the cabin 101, multiple passenger displays, such as displays 110a and 110n, may be provided for the passengers. In some embodiments, as shown in this example, each passenger in the row may be provided a passenger display mounted on a back panel of a seat in front of the passenger. In this example, the passenger display 110a is provided to passenger 108c, and the display 110n is provided to the passenger 108d. A given passenger display 110 provided in the cabin 101 may include a LCD screen similar to the one fitted on the dashboard as described above. As described herein, the given passenger display 110 may be connected to a user portable device associated with a passenger. For example, the passenger display 110a may be connected to a portable device associated with passenger 108c, and the passenger display 110n may be connected to a portable device associated with passenger 108d.

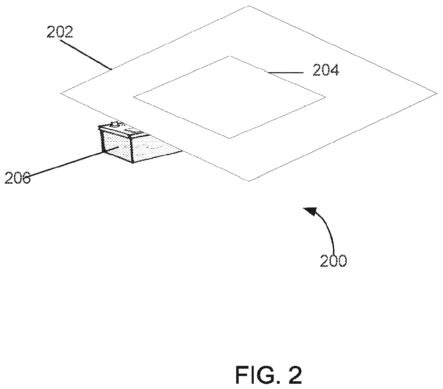

FIG. 2 illustrates generally a battery heating system 200 for heating/warming one or more batteries in a transportation apparatus, such as the transportation apparatus 100 shown in FIG. 1. As shown, the battery heating system 200 can include a floor mat device 204, a heat exchange mechanism 204 and/or any other components. The floor mat device 204 may be placed and secured on a floor board of transportation apparatus 100. For achieving this, the floor mat device 204 may comprise a fastening component (not shown) to facilitate the floor mat device 204 to be secured to a floor board of the transportation apparatus. Floor mat device 204 may be controllably connected to a power source, such as 12 volt, high amperage (greater than 15 amps) electrical power source. In some embodiments, the floor mat device 204 may include a boost transformer/converter to produce higher voltage and enable heating elements therein to be smaller. In some embodiments, the floor mat device 204 may be made of plastic, urethane, neoprene or other composite materials to enclose electrical conductors, heating elements and/or any other components internal to the floor mat device 204 and transfer the electrically produced heat to the heating mechanism.

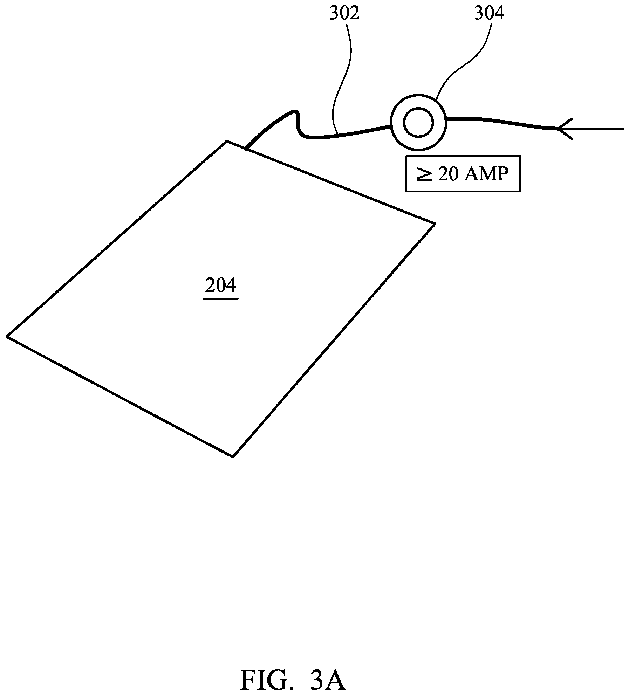

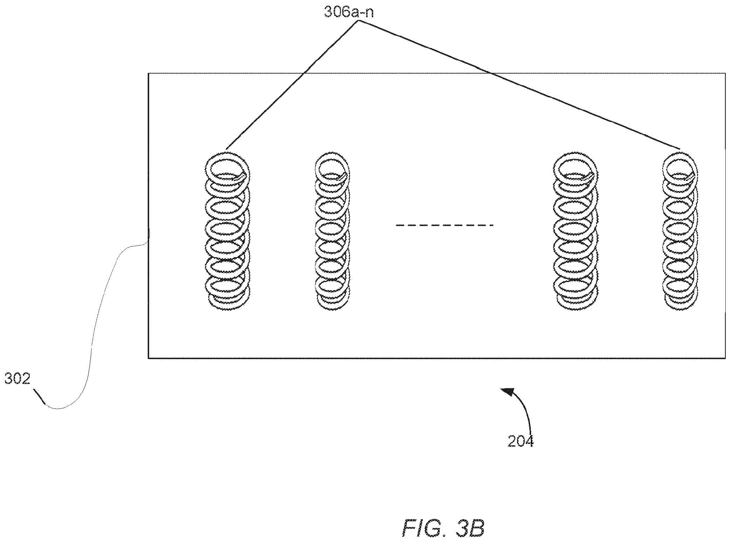

FIG. 3A illustrates one example of a floor mat device 204 in accordance with the disclosure. As shown in this example, the floor mat device 204 can be directly connected by a conductor 302 to an electrical power source 304 onboard the transportation apparatus 100. As shown, the electrical source can be a 12 Volt power source. However, this is not intended to be limiting. The electrical power source 304 can provide more or less than 12 Volt power to the floor mat device 204. FIG. 3B illustrates one example of an interior of the floor mat device 204 shown in FIG. 3A. As shown, the floor mat device 204 can include one or more heating elements 306a-n, such as coils that can generate resistive heat from the electric power provided through conductor 302.

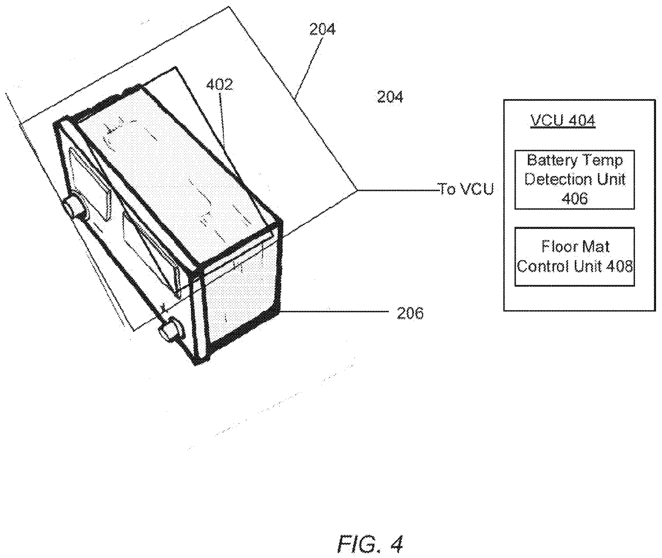

FIG. 4 illustrates one example of a battery heat exchange mechanism 204 in accordance with the disclosure. As mentioned above, in implementations the battery heating mechanism 204 may be embedded within the floor mat device 202. However, this is not necessarily the only case. It is contemplated the battery heating mechanism 204 can be removable coupled to the floor mat device and embed in the floor board of the transportation apparatus 100. As shown, the heat exchange mechanism 204 can comprise one or more plate members 402 that make a contact with a surface of the battery 206. The plate member(s) 402 can be made of any suitable heat conductive material such as aluminum or stainless steel. In operations, the plate member(s) 402 can absorb heat generated by the floor mat device 204 and transfer the absorbed heat to the battery 206 via the contact.

In some implementations, the member plate (s) 402 may include a sensor that can be configured to detect a temperature of the surface of the battery at the contact. In those implementations, the heat exchange mechanism 204 can be operatively couple to a vehicle control unit (not shown) configured to control heat generation by the floor mat device, such as VCU 404 shown in this example. The VCU 404 can comprise a battery temperature detection unit 406 configured to receive a temperature of the battery 206 from the heat exchange mechanism. The VCU 404 can comprise a floor mat control unit 408 configured to control activation/deactivation and/or heat generation by the floor mat device 204. For example, in response to the battery temperature having dropped below a preset minimum threshold temperature, the floor mat control unit 408 can be configured to activate the floor mat device 204 and to have it start generating heat to warm the battery 206. In response to battery temperature having risen above a threshold up-limit (or upper limit) temperature, the floor mat control unit 408 can be configured to deactivate the floor mat device 204 and to have it stop generating heat. In some implementations, the floor mat control unit 408 can be configured to control the amount of heat generated by the floor mat device 204 so as to control a time duration in which the battery 206 can be warmed from the current temperature to the up-limit temperature. In some implementations, the floor mat control unit 408 can be configured to activate the floor mat device automatically when the transportation apparatus 100 is started by a user of the transportation apparatus 100.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A battery heating system for heating a battery of a transportation apparatus comprising:
a floor mat device; and
a heat exchange mechanism; and, wherein
the floor mat device comprises:
one or more heating elements configured to generate heat; and
the heat exchange mechanism comprises a plate member configured to:
absorb the heat generated by the floor mat device; and
facilitate transferring the heat to a surface of the battery of the transportation apparatus.

2. The battery heating system of claim 1, wherein the floor mat device comprises an electrical connector configured to be connected to an electrical power source onboard the transportation apparatus, and wherein the one or more heating elements are configured to generate the heat from electrical power provided by the electrical connector.

3. The battery heating system of claim 1 or 2, wherein the heat exchange mechanism is arranged to make a contact with the surface of the battery, and wherein the heat exchange mechanism facilitates the heat transfer to the battery at the contact.

4. The battery heating system of any preceding claim, wherein the plate member in the heat exchange mechanism comprises a temperature sensor configured to detect a temperature at the surface of the battery.

5. The system of claim 4, wherein the heat exchange mechanism is operatively coupled to a vehicle control unit (VCU) configured to control the floor mat device based on the temperature detected by the temperature sensor.

6. The system of claim 4 or 5, wherein the VCU comprises:
a battery temperature unit configured to receive the detected temperature of the battery surface from the heat exchange mechanism; and
a floor mat device control unit configured to control the floor mat device based on the detected temperature of the battery surface.

7. The system of claim 6, wherein controlling the floor mat device by the floor mat device control unit comprises:
determining that the detected temperature of the batty surface is below a predetermined minimum threshold temperature; and
in response to the detected temperature of the battery surface being below the predetermined minimum threshold temperature, activate the floor mat device to generate the heat.

8. The system of claim 6 or 7, wherein controlling the floor mat device by the floor mat device control unit comprises:
determining that the detected temperature of the batty surface is above a predetermined upper threshold temperature; and
in response to the detected temperature of the battery surface being above the predetermined upper threshold temperature, deactivate the floor mat device.

9. The system of any of claims 6 to 8, wherein controlling the floor mat device by the floor mat device control unit comprises: activating the floor mat device when the transportation apparatus is started.

10. The system of any preceding claim, wherein the plate member is made of a heat conductive material.

11. The system of any preceding claim, wherein the floor mat device is removably attached to a floor board of the transportation apparatus.

12. The system of any preceding claim, wherein the heat exchange mechanism is integrally arranged within the floor mat device.

13. The system of any of claims 1 to 11, wherein the heat exchange mechanism is arranged below the floor mat device.
